(19) Europäisches Patentamt
European Patent Office
Office européen des brevets

(11) **EP 3 548 938 B1**

(12) **FASCICULE DE BREVET EUROPEEN**

(45) Date de publication et mention
de la délivrance du brevet:
**09.06.2021 Bulletin 2021/23**

(51) Int Cl.:
***G02B 5/08*** *(2006.01)*      ***G21K 1/06*** *(2006.01)*
***G02B 5/26*** *(2006.01)*

(21) Numéro de dépôt: **17808407.5**

(22) Date de dépôt: **27.11.2017**

(86) Numéro de dépôt international:
**PCT/EP2017/080549**

(87) Numéro de publication internationale:
**WO 2018/099866 (07.06.2018 Gazette 2018/23)**

(54) **COMPOSANT DE SELECTION SPECTRALE POUR RADIATIONS XUV**

SPEKTRUMSAUSWAHLKOMPONENTE FÜR XUV-STRAHLUNG

SPECTRAL SELECTION COMPONENT FOR XUV RADIATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.11.2016 FR 1661636**

(43) Date de publication de la demande:
**09.10.2019 Bulletin 2019/41**

(73) Titulaire: **Centre National de la Recherche
Scientifique
75016 Paris (FR)**

(72) Inventeurs:
• **DELMOTTE, Franck
91440 Bures sur Yvette (FR)**
• **DEHLINGER, Maël
91400 Orsay (FR)**

(74) Mandataire: **Marks & Clerk France
Immeuble "Visium"
22, avenue Aristide Briand
94117 Arcueil Cedex (FR)**

(56) Documents cités:
**US-A- 5 173 930    US-A1- 2010 277 804**

• **LUCA POLETTO ET AL: "Time-compensated
extreme-UV and soft x-ray monochromator for
ultrashort high-order harmonic pulses;
Time-compensated EUV and soft x-ray
monochromator for ultrashort high-order
harmonic pulses", JOURNAL OF OPTICS. A,
PURE AND APPLIED OPTICS, INSTITUTE OF
PHYSICS PUBLISHING, BRISTOL, GB, vol. 3, no.
5, 1 septembre 2001 (2001-09-01), pages 374-379,
XP020080788, ISSN: 1464-4258, DOI:
10.1088/1464-4258/3/5/310**

**Description**

**DOMAINE TECHNIQUE**

La présente description concerne un composant de sélection spectrale pour radiations XUV, un système d'émission d'un faisceau de radiations XUV équipé d'un tel composant ainsi qu'un procédé de sélection spectrale pour radiations XUV.

**ETAT DE L'ART**

L'étude des dynamiques ultrarapides à l'échelle femtoseconde (fs) ou attoseconde (as) dans les atomes et les molécules est un domaine de recherche en forte croissance qui intéresse à la fois la matière diluée, la matière condensée et les plasmas. Ces études nécessitent de soumettre la matière à étudier à un champ laser ultra-bref et intense. Notamment, l'exploration de la matière avec des impulsions cohérentes dans le domaine XUV (ou EUV pour « Extrême UV ») comprenant typiquement des radiations d'énergie comprises entre 12 eV et 400 eV (c'est à dire des longueurs d'onde comprises entre 3 nm et 100 nm) connaît un essor particulièrement rapide. En effet, les impulsions XUV à phase contrôlée permettent une stimulation de la matière avec une résolution temporelle attoseconde (as) (1 as = $10^{-18}$ s) ; des impulsions XUV de plus grande durée d'impulsion (typiquement ps) peuvent donner accès aux structures électroniques avec une résolution en énergie inférieure au meV, permettant d'obtenir des informations détaillées sur les couplages électrons-noyaux.

Parmi les sources d'impulsions XUV, on connaît les sources à génération d'harmoniques d'ordre élevé, dîtes sources HHG (abréviation de l'expression anglo-saxonne « High Harmonie Generation »), dont le principe d'émission est basé sur l'interaction d'un laser infrarouge (IR) intense avec des atomes ou molécules. Des impulsions cohérentes XUV dans la gamme fs à as sont obtenues par génération par effet non linéaire d'harmoniques d'ordre élevé du rayonnement fondamental incident. Les sources HHG ont aujourd'hui atteint une maturité technologique et sont particulièrement adaptées pour réaliser des études de dynamique ultrarapide à l'échelle d'un laboratoire. On connait également les lasers plasma XUV, basés sur l'émission non cohérente de rayonnement XUV par un plasma crée par laser fs ou ps. Il existe enfin les lasers à électrons libres, dont le principe d'émission est basé sur l'interaction entre un faisceau d'électrons énergétiques avec un champ magnétique périodique, ce qui permet de générer des impulsions XUV cohérentes ultrabrèves (fs).

Parallèlement aux sources XUV, se sont développés des composants optiques et des détecteurs pour la caractérisation et le contrôle des impulsions. Notamment, les composants de sélection spectrale, ou monochromateurs, permettent la sélection d'une longueur d'onde d'intérêt.

Les réseaux de diffraction permettent de réaliser des monochromateurs possédant une très bonne résolution spectrale. Cependant, concernant les applications dans le domaine des impulsons ultra brèves, il est nécessaire de transporter une impulsion sans altérer sa durée, ce qui revient à pouvoir transmettre l'impulsion avec une certaine étendue spectrale. Dans l'extrême UV, cela correspond à une bande passante de l'ordre de un à quelques électronvolts. Or il est connu qu'un réseau de diffraction, du fait même du phénomène de diffraction, entraîne inévitablement un élargissement temporel de l'impulsion. Comme décrit dans L. Poletto et al. (« Time-compensated extreme-UV and soft x-ray monochromator for ultrashort high-order harmonie pulses », J. Opt. A: Pure Appl. Opt. 3 (201) 374 - 379)), il est possible de compenser la dispersion temporelle dans une configuration à deux réseaux de diffraction travaillant en incidence rasante. Cependant, le composant ainsi formé présente une grande sensibilité aux problèmes de désalignement, d'aberration et de défauts de surface. Par ailleurs, la compensation de la dispersion temporelle pour un angle donné est optimale dans une région spectrale très fine, ce qui entraine la nécessité de changer la direction de sortie du monochromateur lorsqu'on veut faire une compensation de la dispersion sur une plus grande plage spectrale.

Dans l'article de L. Poletto ci-dessus cité, il est préconisé comme alternative aux réseaux de diffraction, l'utilisation de deux miroirs multicouches.

Les miroirs multicouches sont connus pour présenter une grande réflectivité dans le domaine XUV. La physique des miroirs multicouches est bien connue et est décrite dans plusieurs ouvrages scientifiques (voir par exemple E. Spiller, « Soft X-Rays Optics », SPIE Optical Engineering Press, Bellingham (1994)). Les miroirs multicouches peuvent être utilisés en incidence normale ou en incidence oblique. Ils sont composés d'un revêtement fait d'une alternance de couches d'épaisseur nanométrique de matériaux avec un fort contraste d'indices de réfraction ; typiquement, il s'agit d'une alternance de matériaux à fort et à faibles numéros atomiques. La détermination du choix des matériaux et des épaisseurs des couches permet de définir les propriétés optiques du miroir (longueur d'onde/énergie de plus forte réflectivité, bande passante, forme de la réponse spectrale en réflectivité). Par ailleurs, la réponse spectrale en réflectivité étant dépendante de l'angle d'incidence, il est possible en faisant tourner les miroirs de choisir la longueur d'onde (ou l'énergie) réfléchie par chacun des miroirs et donc émise en sortie du monochromateur.

Le monochromateur proposé par L. Poletto comprend ainsi deux miroirs multicouches identiques travaillant en faisceau parallèle, adaptés pour tourner autour d'un axe vertical parallèle au plan du miroir tout en restant parallèles l'un à l'autre afin de maintenir une direction constante du faisceau de sortie. Le monochromateur ainsi décrit permet par rapport à la technologie basée sur les réseaux de diffraction de garder une direction de sortie constante dans la région spectrale d'intérêt. Il présente par ailleurs un encombrement plus faible et une meilleure compensation de la dispersion temporelle.

Cependant, les miroirs multicouches présentent une réflectivité optimisée pour un angle d'incidence donné et lorsqu'on change l'angle d'incidence pour faire varier l'énergie, il s'en suit un élargissement de la bande spectrale (en énergie) définie comme la largeur à mi-hauteur de la réponse spectrale en réflectivité.

La présente description propose un monochromateur présentant un agencement particulier de deux miroirs multicouches, qui permet de conserver non seulement la direction de sortie mais aussi la largeur à mi-hauteur de la réponse spectrale en réflectivité, lorsque l'angle d'incidence sur les miroirs est modifié.

**RESUME**

La présente description a pour objet, selon un premier aspect, un composant de sélection spectrale pour radiations XUV comprenant :

- un premier miroir multicouche destiné à recevoir un faisceau de radiations XUV selon un axe d'entrée situé dans un premier plan d'incidence donné et comprenant un premier axe de rotation sensiblement perpendiculaire au premier plan d'incidence;

- un deuxième miroir multicouche destiné à recevoir dans un deuxième plan d'incidence un faisceau de radiations XUV réfléchi par le premier miroir pour le renvoyer vers un axe de sortie du composant de sélection spectrale, et comprenant un deuxième axe de rotation sensiblement perpendiculaire au deuxième plan d'incidence;

  dans lequel :

  - l'un desdits miroirs présente une première réponse spectrale en énergie passe-haut, avec un flanc du côté des énergies basses de raideur supérieure à 0,1 eV$^{-1}$ et une réjection des basses énergies plus grande que 20;

  - l'autre miroir présente une deuxième réponse spectrale en énergie passe-bas, avec un flanc du côté des énergies hautes de raideur supérieure à 0,1 eV$^{-1}$ et une réjection des hautes énergies plus grande que 20 ;

  - lesdits miroirs présentent un recouvrement seulement partiel de leurs réponses spectrales en énergie.

Dans la suite de la description, le miroir présentant une première réponse spectrale en énergie passe-haut est simplement appelé « miroir passe-haut » et le miroir présentant une première réponse spectrale en énergie passe-bas est simplement appelé « miroir passe-bas ».

Par réponse spectrale en énergie du miroir, on entend la courbe de réflectivité du miroir en fonction de l'énergie dans l'XUV.

Les déposants ont montré qu'on pouvait obtenir grâce au composant de sélection spectrale selon la présente description une accordabilité sur une plage spectrale d'au moins 20 eV avec une conservation de la largeur à mi-hauteur de la réponse spectrale en réflectivité à mieux que 0,1 eV, tout en gardant une excellente réjection. Cet effet technique est obtenu par le recouvrement seulement partiel des réponses de chaque miroir combiné à la raideur d'un flanc de chaque miroir et à la très bonne réjection du coté de ce flanc.

En effet, dans le composant de sélection spectrale ainsi défini, la bande spectrale est définie par les positions des flancs respectivement du côté des énergies hautes pour le miroir passe-bas et du côté des énergies basses pour le miroir passe-haut, et non plus par la bande spectrale d'un seul miroir.

Dans la présente description, le recouvrement entre les réponses est dit « seulement partiel » si l'énergie correspondant à 1/25 de la réflectivité maximale du miroir passe-bas sur le flanc du coté des énergies hautes est strictement supérieure à l'énergie correspondant à 1/25 de la réflectivité maximale du miroir passe-haut sur le flanc du coté des énergies basses et la différence des énergies correspondant à la moitié de la réflectivité maximale respectivement des miroirs passe-haut sur le flanc du coté des énergies basses et passe-bas sur le flanc du coté des énergies hautes est (en valeur absolue) strictement inférieure à 90% de la plus petite largeur à mi-hauteur des réponses spectrales (en énergie) des miroirs passe-haut et passe-bas.

Selon un ou plusieurs exemples de réalisation, les miroirs d'entrée et de sortie sont des miroirs multicouches multi périodiques, avantageusement bipériodiques, ou apériodiques.

Selon un ou plusieurs exemples de réalisation, le premier plan d'incidence et le deuxième plan d'incidence sont confondus.

Selon un ou plusieurs exemples de réalisation, le composant de sélection spectrale selon la présente description comprend des moyens de couplage des rotations des premier et deuxième miroirs respectivement autour des premier et deuxième axes de rotation, permettant de conserver l'axe de sortie parallèle à l'axe d'entrée. Ainsi la rotation d'un miroir est effectuée de façon dépendante de celle de l'autre miroir pour conserver l'axe de sortie parallèle à l'axe d'entrée.

Selon un ou plusieurs exemples de réalisation, le composant de sélection spectrale comprend en outre des moyens de translation de l'un et/ou l'autre des premier et deuxième miroirs, selon un axe parallèle à l'axe d'entrée, permettant de garder fixe l'axe de sortie lorsque les miroirs sont entraînés en rotation.

Selon un ou plusieurs exemples de réalisation,

- au moins l'un des premier et deuxième miroirs présente un gradient latéral d'épaisseur dans une direction sensiblement perpendiculaire au plan d'incidence du miroir;

- le composant comprend en outre des moyens de translation dudit miroir dans la direction du gradient.

Dans la suite de la description, un axe ou une surface /un plan est dit(e) sensiblement parallèle à un autre axe ou à une autre surface / un plan si l'écart de parallélisme est inférieur à 3 degrés. De la même manière, un axe ou une surface / un plan est dit(e) sensiblement perpendiculaire à un autre axe ou à une autre surface / un plan si l'écart de perpendicularité est inférieur à 3 degrés.

La présente description a pour objet, selon un deuxième aspect, un système d'émission d'un faisceau de radiations XUV comprenant une sources de radiations XUV destinée à émettre un faisceau de radiations XUV selon une direction donnée et un composant de sélection spectrale selon le premier aspect, destiné à recevoir ledit faisceau de radiations selon son axe d'entrée.

Les composants de sélection spectrale décrits dans la présente description présentent des applications notamment pour l'instrumentation des sources cohérentes XUV. Les composants de sélection spectrale décrits dans la présente description sont notamment intéressants lorsqu'ils sont couplés à une source HHG car ils permettent la sélection d'une énergie avec une bande passante constante, et, selon un ou plusieurs exemples de réalisation, de régler indépendamment l'énergie et la durée de l'impulsion. Ils peuvent s'appliquer également aux autres sources XUV en tant que monochromateurs.

Les composants de sélection spectrale peuvent également être utilisés avantageusement avec d'autres types de sources (plasmas, rayonnement synchrotron, etc.) par exemple pour la spectroscopie Extrême UV pour l'astrophysique (radiations incohérentes), l'instrumentation sur sources synchrotron ou encore la spectrométrie X de plasmas denses. Notamment, la double accordabilité du dispositif (en énergie et en bande passante) présente en effet un intérêt par rapport aux solutions utilisées actuellement.

La présente description a pour objet, selon un troisième aspect, un procédé de sélection spectrale d'un faisceau de radiations XUV ($I_1$) présentant une large bande spectrale, comprenant :

- la réflexion par un premier miroir multicouche du faisceau de radiations XUV selon un axe d'entrée situé dans un premier plan d'incidence;

- la réflexion par un deuxième miroir multicouche du faisceau de radiations XUV réfléchi par le premier miroir vers un axe de sortie du composant de sélection spectrale, le faisceau réfléchi par le deuxième miroir et l'axe de sortie étant compris dans un deuxième plan d'incidence;

- la rotation du premier miroir selon un premier axe de rotation sensiblement perpendiculaire au premier plan d'incidence et la rotation du deuxième miroir selon un deuxième axe de rotation sensiblement perpendiculaire au deuxième plan d'incidence pour changer l'énergie du faisceau de radiation XUV en sortie ;
dans lequel :

- l'un desdits miroirs présente une première réponse spectrale en énergie passe-haut, avec un flanc du côté des énergies basses de raideur supérieure à 0,1 eV$^{-1}$ et une réjection des basses énergies plus grande que 20;

- l'autre miroir présente une deuxième réponse spectrale en énergie passe-bas, avec un flanc du côté des énergies hautes de raideur supérieure à 0,1 eV$^{-1}$ et une réjection des hautes énergies plus grande que 20 ;

- lesdits miroirs présentent un recouvrement seulement partiel de leurs réponses spectrales en énergie.

Selon un ou plusieurs exemples de réalisation, les rotations des premier et deuxième miroirs sont couplées, permettant de conserver l'axe de sortie parallèle à l'axe d'entrée. Le couplage peut être opéré manuellement ou de façon automatique avec des moyens de couplage.

Selon un ou plusieurs exemples de réalisation, le procédé comprend en outre la translation de l'un et/ou l'autre des premier et deuxième miroirs selon un axe sensiblement parallèle à l'axe d'entrée, permettant de garder fixe l'axe de sortie lorsque les miroirs sont entraînés en rotation.

Selon un ou plusieurs exemples de réalisation, au moins l'un des premier et deuxième miroirs présentant un gradient latéral d'épaisseur dans une direction sensiblement perpendiculaire au plan d'incidence du miroir, le procédé comprend en outre une translation dudit miroir dans la direction du gradient afin de modifier la largeur spectrale du faisceau de radiation XUV en sortie.

## BREVE DESCRIPTION DES FIGURES

D'autres avantages et caractéristiques de la technique présentée ci-dessus apparaîtront à la lecture de la description détaillée ci-dessous, faite par référence aux figures dans lesquelles :

La FIG. 1A représente de façon schématique un composant de sélection spectrale selon un exemple de réalisation de la présente description, recevant un faisceau de radiations XUV selon un axe d'entrée faisant avec le premier miroir un premier angle d'incidence;

La FIG. 1B représente de façon schématique le même composant, recevant un faisceau de radiations XUV selon un axe d'entrée faisant avec le premier miroir un deuxième angle d'incidence différent du premier angle d'incidence ;

La FIG. 2A représente à des fins illustratives un exemple de courbe de réponse spectrale en énergie de la réflectivité d'un miroir multicouches « passe-haut » selon la présente description ;

La FIG. 2B représente à des fins illustratives des exemples de courbes de réponse spectrale en énergie de la réflectivité de deux miroirs multicouches, respectivement « passe-haut » et « passe-bas » dans un exemple de composant de sélection spectrale selon la présente description ;

La FIG. 2C illustre la courbe de réponse spectrale en énergie de la réflectivité d'un composant associant les miroirs passe-haut et passe-bas dont des réponses sont montrées sur la FIG. 2B ;

La FIG. 3A illustre des courbes de réponse spectrale en énergie de la réflectivité pour un composant associant des miroirs passe-haut et passe-bas dont des réponses sont montrées sur la FIG. 2B, lorsqu'on fait varier l'angle d'incidence ;

La FIG. 3B illustre à des fins comparatives, des courbes de réponse spectrale en énergie de la réflectivité pour un composant de sélection spectrale selon l'art antérieur, lorsqu'on fait varier l'angle d'incidence ;

Les FIGS. 4A et 4B illustrent un exemple de réalisation d'un composant de sélection spectrale selon la présente description, dans lequel l'un des premier et deuxième miroirs présente un gradient d'épaisseur;

La FIG. 5A illustre la courbe de réponse spectrale en réflectivité d'un composant tel que montré sur la FIG. 4A, pour différentes positions du faisceau de radiations sur le miroir à gradient d'épaisseur ;

La FIG. 5B illustre la courbe de réponse spectrale en réflectivité d'un composant tel que montré sur la FIG. 4A, pour différentes positions du faisceau de radiations sur le miroir à gradient d'épaisseur et différents angles d'incidence;

La FIG. 6A illustre une application d'un composant de sélection spectrale selon la présente description à la sélection d'une harmonique d'une source HHG ;

La FIG. 6B illustre une application d'un composant de sélection spectrale selon la présente description à la sélection de plusieurs harmoniques d'une source HHG ;

Les FIGS. 7A et 7B illustrent des exemples de réalisation de miroirs multicouches, respectivement bipériodiques et apériodiques, adaptés à l'obtention d'un composant de sélection spectrale selon la présente description.

## DESCRIPTION DETAILLEE

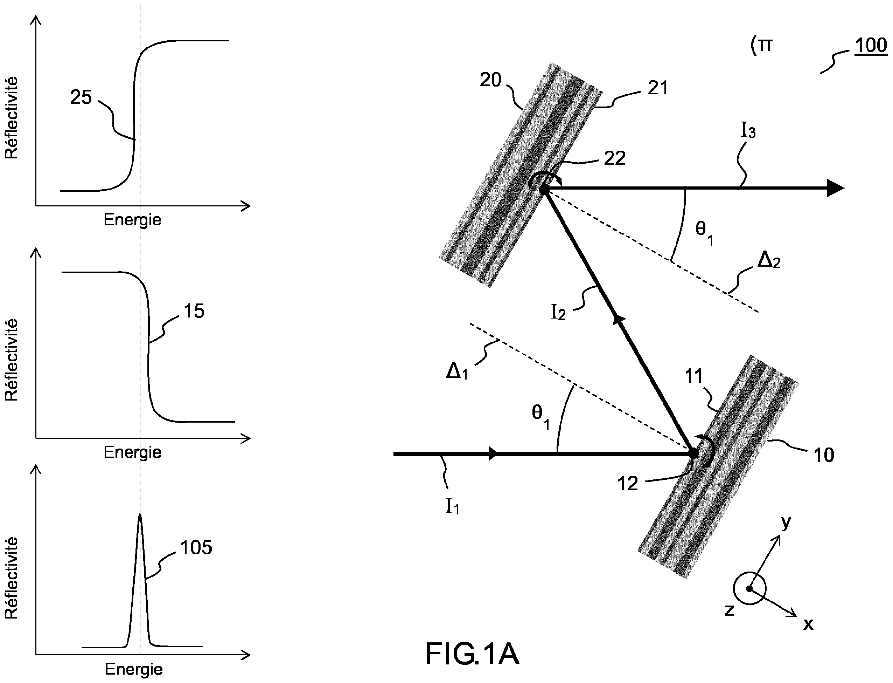

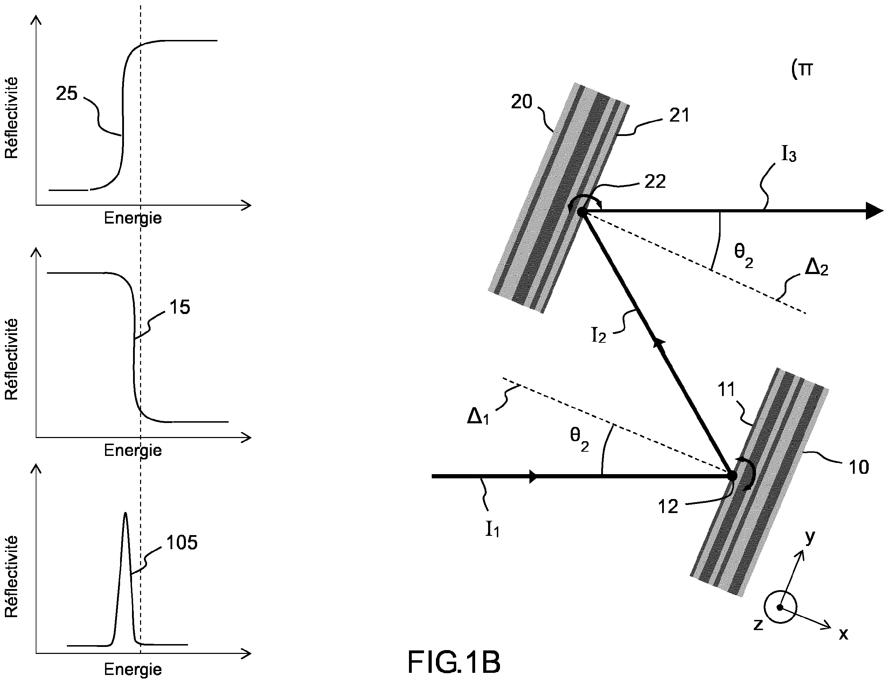

Les FIGS. 1A et 1B illustrent le fonctionnement d'un exemple de composant de sélection spectrale 100 selon la présente description.

Dans ces exemples, un faisceau de radiations XUV $I_1$ est envoyé selon un axe d'entrée faisant un angle d'incidence respectivement $\theta_1$ (FIG. 1A) avec la normale $\Delta_1$ au premier miroir 10 (également appelé miroir d'entrée dans la présente demande) ou un angle d'incidence $\theta_2$ (FIG. 1B), le premier miroir étant tourné.

Sur ces figures, on a représenté un repère XYZ situé dans le référentiel du premier miroir ou miroir d'entrée 10.

Comme illustré sur la FIG. 1A, le composant de sélection spectrale 100 comprend un premier miroir multicouche 10 (miroir d'entrée) avec une surface 11 destinée à recevoir un faisceau de radiations XUV $I_1$ selon un axe d'entrée situé dans un premier plan d'incidence donné $\Pi$ qui contient également la normale $\Delta_1$ à la surface du premier miroir. L'axe d'entrée est en général un axe fixe, prédéfini, ce qui permettra d'intégrer facilement le composant de sélection spectral dans un système comprenant en outre la source de radiations XUV par exemple, en vue d'une application donnée. Le composant de sélection spectrale 100 comprend en outre un deuxième miroir multicouche 20 (miroir de sortie) avec une surface 21 destinée à recevoir un faisceau de radiations XUV $I_2$ réfléchi par le premier miroir 10 pour le renvoyer sous forme d'un faisceau de radiations $I_3$ vers un axe de sortie du composant spectral de sélection. L'axe de sortie se situe dans un deuxième plan d'incidence qui est le plan d'incidence du deuxième miroir, défini comme le plan comprenant le faisceau réfléchi $I_2$ et la normale $\Delta_2$ à la surface du deuxième miroir. Les surfaces peuvent être planes, comme illustré sur les FIGS. 1A, 1B ou présenter une courbure, notamment si l'on cherche à faire converger/diverger le faisceau de radiations XUV.

En pratique, on cherchera à ce que le premier plan d'incidence et le deuxième plan d'incidence soient confondus pour former un plan d'incidence unique $\Pi$, comme cela est illustré sur les FIGS 1A et 1B. En effet, cela simplifie grandement la conception des miroirs. Pour cela, on s'assurera que les surfaces des miroirs 10 et 20 sont sensiblement parallèles entre elles si les surfaces sont planes, ou que les tangentes à ces surfaces aux points d'intersection avec les axes des faisceaux de radiations incidents sont sensiblement parallèles entre elles, si les surfaces présentent une courbure.

Les premier et deuxième miroirs multicouches 10, 20 comprennent chacun un axe de rotation perpendiculaire au plan d'incidence du miroir, et notés respectivement 12, 22 sur les FIGS. 1A et 1B. Comme illustré sur les figures, l'axe de rotation de chaque miroir est par exemple sensiblement tangent à la surface du miroir destinée à recevoir le faisceau de radiation. On cherche généralement à ce que l'axe de rotation de chaque miroir passe par un point situé à proximité du point d'intersection de l'axe du faisceau de radiations avec la surface du miroir, ce qui permet de limiter le décalage du faisceau sur le miroir lorsque celui-ci est entraîné en rotation.

Selon un exemple de réalisation, le composant de sélection spectrale comprend par ailleurs des moyens de couplage des rotations des miroirs d'entrée 10 et de sortie 20 (non représentés sur les figures) qui permettent de faire tourner les miroirs de façon concomitante pour garder un axe de sortie de direction sensiblement constante, parallèle à l'axe d'entrée. Ainsi, comme cela apparaît sur la FIG. 1B, la rotation du miroir d'entrée 10 autour de son axe de rotation 12 est faite simultanément à une rotation du miroir de sortie 20 autour de son axe de rotation 22 de telle sorte que la direction de l'axe des radiations $I_3$ en sortie du composant reste constante lorsque l'angle d'incidence sur le miroir d'entrée 10 varie du fait de la rotation du premier miroir 10. De cette manière, les angles d'incidence des radiations XUV sur chacun des miroirs d'entrée et de sortie sont sensiblement identiques, ce qui permet aussi d'avoir des variations angulaires des angles d'incidence sur chacun des miroirs similaires lorsque les miroirs sont entrainés en rotation, et de ce fait une meilleure conservation de la largeur à mi-hauteur de la bande spectrale. En pratique, les rotations des miroirs sont couplées pour que les surfaces des miroirs respectivement d'entrée et de sortie 10, 20 restent sensiblement parallèles si les surfaces sont planes, ou si les tangentes à ces surfaces aux points d'intersection avec les axes des faisceaux de radiations incidents restent parallèles, si les surfaces présentent une courbure.

Selon un exemple de réalisation, le composant de sélection spectrale comprend en outre des moyens de translation de l'un et/ou l'autre des miroirs d'entrée 10 et de sortie 20, non représentés sur les FIGS. 1A et 1B, selon un axe sensiblement parallèle à l'axe d'entrée. Lorsque les rotations des miroirs d'entrée et de sortie sont entraînés en rotation de façon couplée pour garder fixe la direction de l'axe de sortie, il peut être avantageux de prévoir en outre une translation de l'un des miroirs pour corriger le décalage de l'axe de sortie de telle sorte que celui-ci reste fixe lorsque les miroirs sont entraînés en rotation. Cela est utile notamment lorsque le composant de sélection spectrale est intégré dans un système qui nécessite de recevoir un faisceau de radiations XUV d'énergie variable selon un axe prédéterminé.

Contrairement aux composants de sélection spectrale de l'art antérieur, les premier et deuxième miroirs multicouches 10 et 20 ne sont pas identiques. Ils présentent des réponses spectrales en énergie de la réflectivité respectivement passe-haut et passe-bas, comme schématisées sur les courbes 15 et 25 des FIGS 1A et 1B. Les déposants ont en effet démontré que la réponse résultante de la combinaison de ces deux miroirs, schématisée sur la courbe 105, présentait une variation de la largeur à mi-hauteur très faible par rapport à celle résultant de la combinaison de deux miroirs présentant des réponses en énergie de la réflectivité identiques.

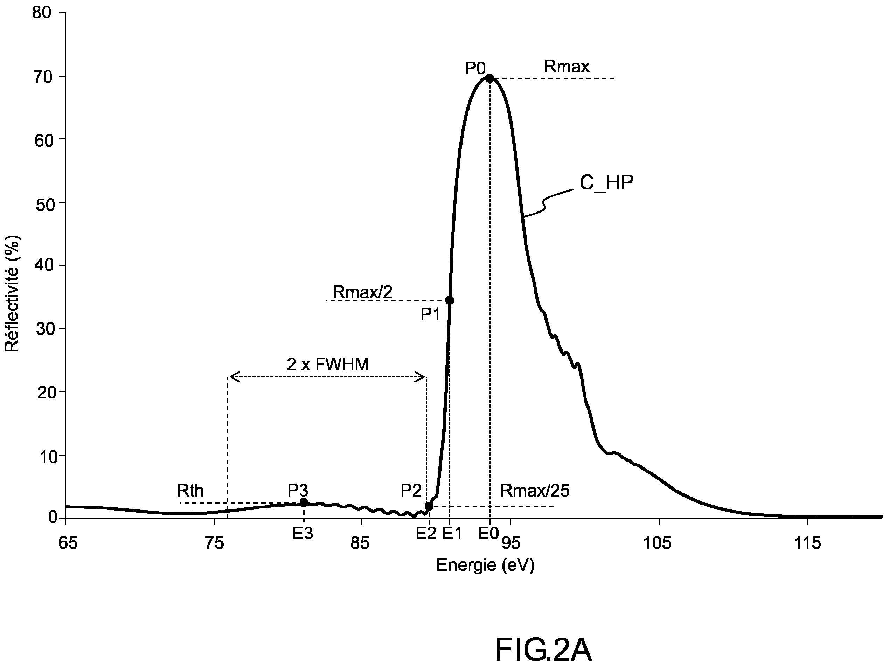

Un exemple de réponse en énergie de la réflectivité d'un filtre passe-haut adapté pour la formation d'un composant de sélection spectrale selon la présente description est représenté de façon plus détaillée sur la FIG. 2A.

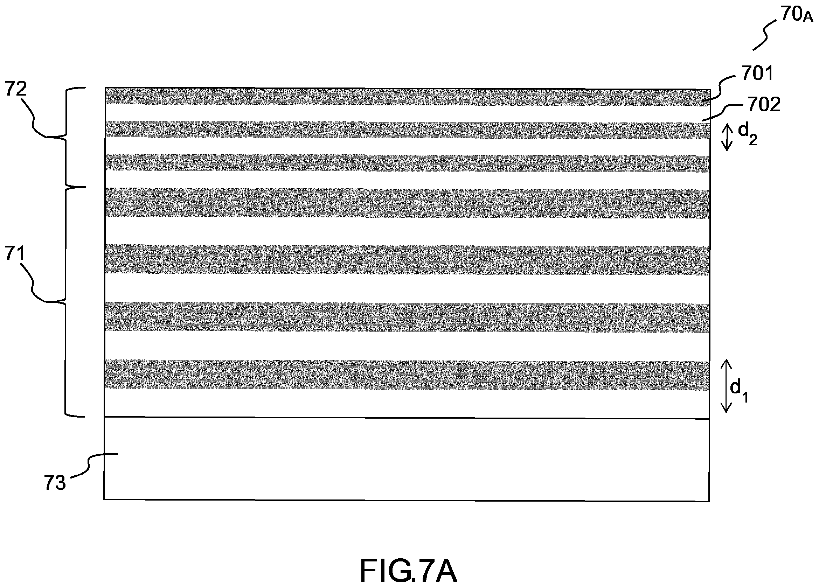

La courbe (C_HP) est calculée pour un miroir multicouche bipériodique, du type de celui représenté sur la FIG. 7A, avec une alternance de couches Molybdène 702 (Mo) / Silicium 701 (Si). La multicouche inférieure (71, FIG. 7A), côté substrat 73, comprend un agencement de 68 périodes de couches en Mo d'épaisseur 2,175 nm et de couches en Si d'épaisseur 7,55 nm. La multicouche supérieure (72, FIG. 7A), côté surface, comprend un agencement de 6 périodes de couches en Mo d'épaisseur 3,025 nm et de couches en Si d'épaisseur 6,3 nm.

On peut définir de façon générale les points suivants sur la courbe de réponse donnant la réflectivité en fonction de l'énergie, pour un miroir adapté à un composant de sélection spectrale selon la présente description :

- P0 (E0, Rmax) point d'abscisse E0 présentant une réflectivité maximale Rmax ;
- P1 (E1, Rmax/2) point d'abscisse E1 présentant une réflectivité Rmax/2 du coté des basses énergies (respectivement hautes) pour un miroir passe-haut (respectivement passe-bas), ce côté étant appelé « flanc raide » de la réponse dans la présente description;

- P2 (E2, Rmax/25) point d'abscisse E2 présentant une réflectivité Rmax/25 du coté des basses énergies (respectivement hautes) pour un miroir passe-haut (respectivement passe-bas), c'est-à-dire du côté du flanc raide ;
- P3 (E3, Rth) point d'abscisse E3 présentant une réflectivité maximale Rth sur la plage spectrale [E2 - 2*FWHM; E2] pour le miroir passe-haut ou [E2 ; E2 + 2* FWHM] pour le miroir passe-bas, où FWHM est la largeur à mi-hauteur en énergie de la réponse du miroir.

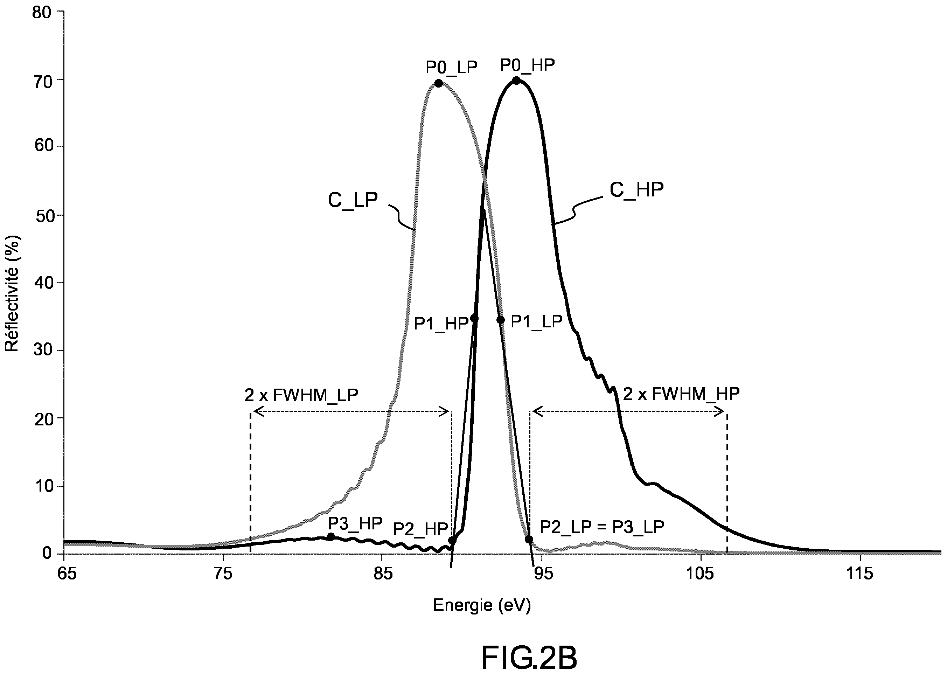

Sur la FIG. 2B sont représentées des exemples de réponses en énergie de la réflectivité d'un filtre passe-haut (courbe C_HP) et d'un filtre passe-bas (courbe C_LP) adapté pour travailler en association avec le filtre passe-haut. Le filtre passe-haut (courbe C_HP) est identique à celui dont la réponse est montrée que la FIG. 2A.

La courbe C_LP est calculée pour un miroir multicouche bipériodique, du type de celui représenté sur la FIG. 7A, avec une alternance de couches Molybdène 702 (Mo) / Silicium 701 (Si). La multicouche inférieure (71, FIG. 7A), côté substrat, comprend un agencement de 68 périodes de couches en Mo d'épaisseur 2,8 nm et de couches en Si d'épaisseur 7,4 nm. La multicouche supérieure (72, FIG. 7A), côté surface, comprend un agencement de 6 périodes de couches en Mo d'épaisseur 2,425 nm et de couches en Si d'épaisseur 8.0 nm.

Comme illustré sur la FIG. 2B, on nommera plus spécifiquement P1_HP (respectivement P1_LP), P2_HP (respectivement P2 LP) et P3_HP (respectivement P3_LP) les points P1, P2 et P3 correspondant au miroir passe-haut (respectivement passe-bas).

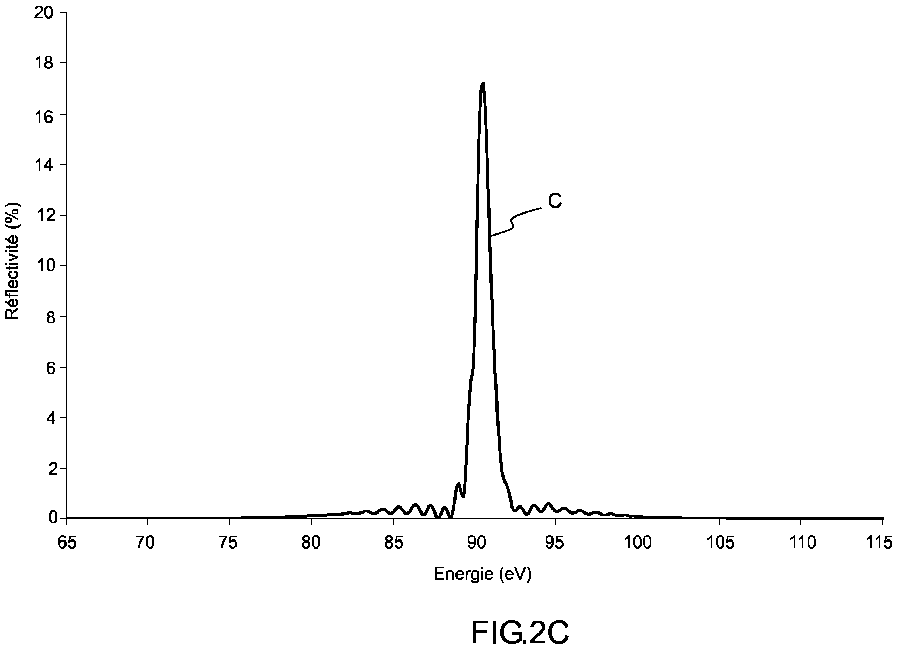

La FIG. 2C illustre la réponse en énergie de la réflectivité d'un composant de sélection spectrale associant les miroirs passe-haut et passe-bas dont les réponses sont montrées sur la FIG. 2B.

On choisira pour la réalisation d'un composant de sélection spectrale selon la présente description un miroir passe-haut avec un flanc du côté des énergies basses (flanc raide) de raideur supérieure à 0,1 eV$^{-1}$ et une réjection des basses énergies plus grande que 20 et un miroir passe-bas avec un flanc du côté des énergies hautes (flanc raide) de raideur supérieure à 0,1 eV$^{-1}$ et une réjection des hautes énergies plus grande que 20. Par ailleurs, les miroirs passe-haut et passe-bas présentent un recouvrement seulement partiel de leurs réponses spectrales en énergie. A noter que le miroir passe-haut (respectivement le miroir passe-bas) peut être indifféremment le miroir d'entrée ou le miroir de sortie.

Dans la présente description, on définit la raideur du flanc raide par la valeur absolue de la pente reliant les points P1 et P2 (FIG. 2A).

On définit la réjection comme le rapport entre Rmax et Rth.

Le recouvrement est dit « seulement limité » si l'énergie correspondant à 1/25 de la réflectivité maximale du miroir passe-bas sur le flanc du coté des énergies hautes est strictement supérieure à l'énergie correspondant à 1/25 de la réflectivité maximale du miroir passe-haut sur le flanc du coté des énergies basses et si la différence des énergies correspondant à la moitié de la réflectivité maximale respectivement des miroirs passe-haut sur le flanc du coté des énergies basses et passe-bas sur le flanc du coté des énergies hautes est (en valeur absolue) strictement inférieure à 90% de la plus petite largeur à mi-hauteur des réponses spectrales (en énergie) des miroirs passe-haut et passe-bas ; autrement dit si :

$$E2\_HP < E2\_LP$$

et

$$ABS\,(E1\_HP - E1\_LP) < 0{,}9 * MIN\,[FWHM\_HP, FWHM\_LP]$$

Comme cela est visible sur la FIG. 2B, il importe peu que la réflectivité chute du côté des énergies hautes dans le cas du miroir passe-haut ou du côté des énergies basses dans le cas du miroir passe-bas; ce qui importe, c'est plutôt une dissymétrie suffisante de la réponse de chaque miroir de telle sorte que soient conservées la raideur et la réjection sur le flanc raide de chacune des réponses lorsqu'on fait varier l'angle d'incidence (ce qui décale les réponses des miroirs en énergie), ainsi qu'un recouvrement suffisant des réponses.

Ainsi, contrairement aux miroirs multicouches des composants de sélection spectrale selon l'art antérieur, pour lesquels on cherchait à obtenir une réponse symétrique en énergie de la réflectivité avec une conservation de la largeur à mi-hauteur, on recherche dans le composant selon la présente description, pour chaque miroir, une réponse avec un seul flanc raide présentant une forte réjection et un recouvrement seulement partiel des réponses. Peu importe que la largeur à mi-hauteur de la réponse de chaque miroir varie avec l'angle d'incidence ; en effet, la réponse du composant de sélection spectrale (voir courbe C, FIG. 2C) est maintenant définie par chacun des flancs raides des réponses de chaque miroir.

A noter qu'il est tout à fait possible pour un homme du métier en utilisant les outils de conception connus, de concevoir des miroirs multicouches répondant à ces contraintes de dimensionnement, comme cela sera expliqué plus en détails par la suite.

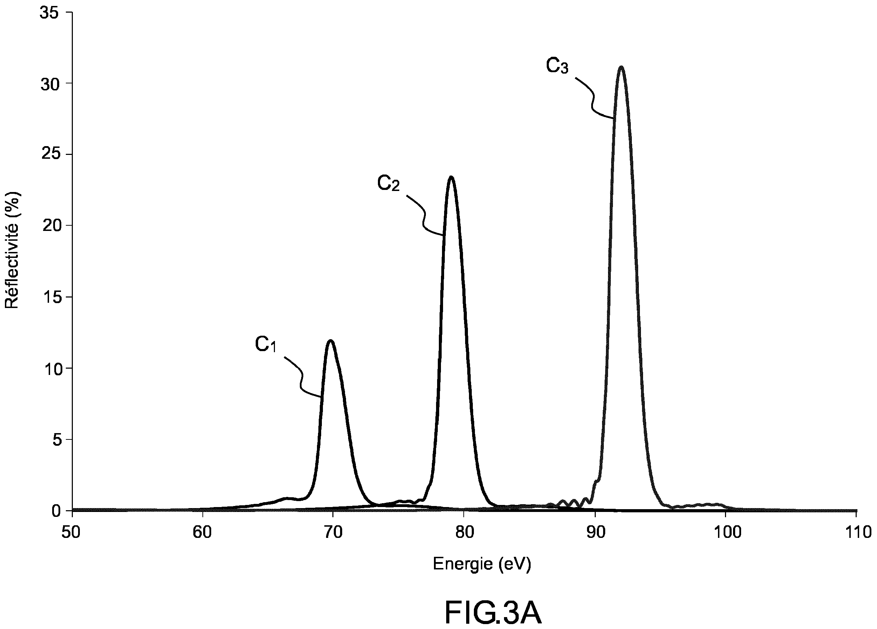

La FIG. 3A illustre par un exemple des courbes de réponse de la réflectivité d'un composant de sélection spectrale associant deux miroirs multicouches avec des réponses montrées sur la FIG. 2B. Les courbes Ci - C₃ correspondent à des angles d'incidence sur le miroir d'entrée (et sur le miroir de sortie) respectivement de $\theta_1$ = 19°, $\theta_1$ = 33,75°, $\theta_1$ = 45,25°. La largeur à mi-hauteur est respectivement de 2,10 eV, 2,03 eV, 2,10 eV. La largeur à mi-hauteur de la réponse varie donc entre ces courbes de 0,07 eV soit de moins de 3,5 %.

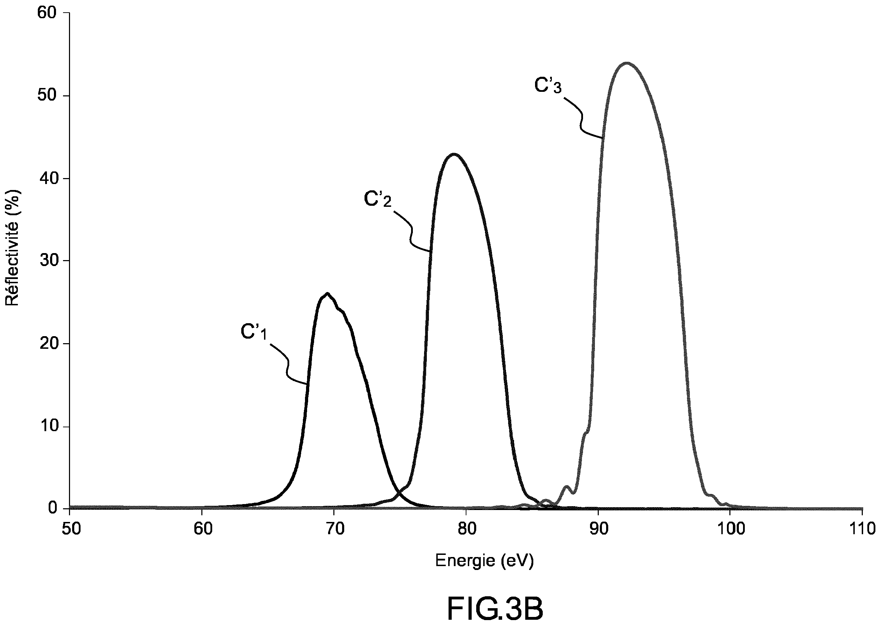

Par comparaison, sont représentées sur la FIG. 3B des courbes de réponse de la réflectivité d'un composant de sélection spectrale associant deux miroirs multicouches identiques.

Le miroir multicouche utilisé pour le calcul des courbes montrées sur la FIG. 3B est optimisé pour un fonctionnement à $\theta_1$ = 45,25°. Il s'agit d'un miroir multicouche périodique, avec une alternance de couches Molybdène (Mo) / Silicium (Si). La multicouche comprend un agencement de 40 périodes de couches en Mo d'épaisseur 3.925 nm et de couches en Si d'épaisseur 6.075 nm.

Sur la FIG. 3B, les courbes C'₁ - C'₃ sont calculées comme pour la FIG. 3A avec des angles d'incidence sur le miroir d'entrée (et sur le miroir de sortie) respectivement de $\theta_1$ = 19°, $\theta_1$ = 33,75°, $\theta_1$ = 45,25°. On observe que la largeur à mi-hauteur est respectivement de 4.80 eV, 5.63 eV, 6.45 eV. La largeur à mi-hauteur de la réponse varie donc entre ces courbes de 1.65 eV soit de 34.4 %.

Bien que la réflectivité soit plus importante avec deux miroirs périodiques identiques, on constate qu'avec le composant spectral dimensionné selon la présente description, une sélectivité et une stabilisation de la largeur spectrale nettement meilleures.

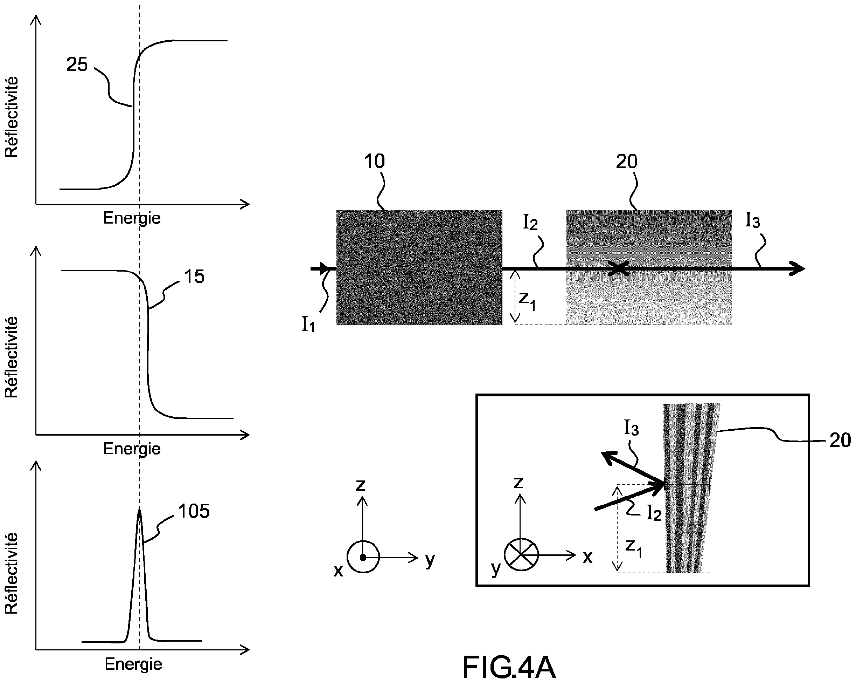

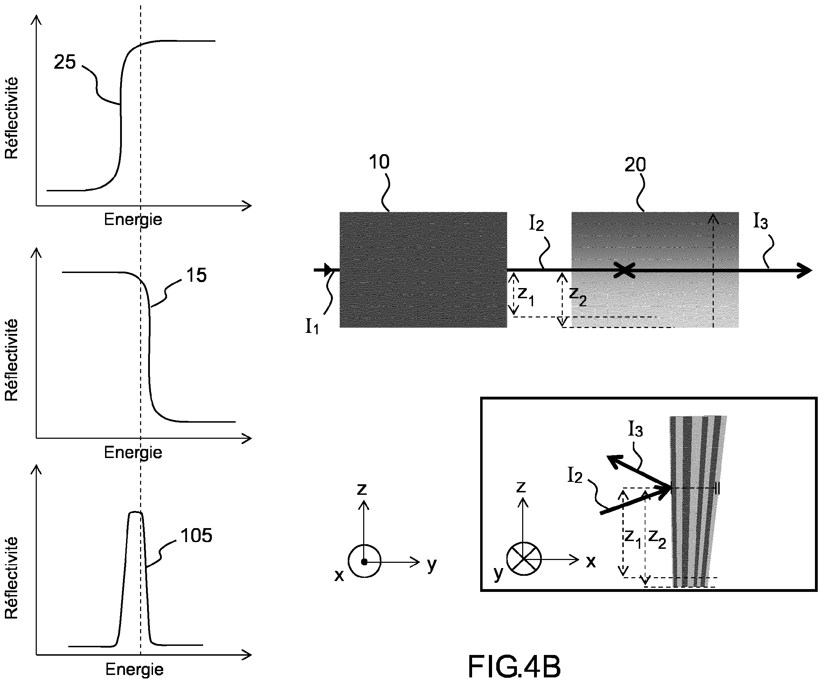

Les FIGS. 4A et 4B illustrent un autre exemple de réalisation dans lequel au moins l'un des deux miroirs 10, 20 du composant de sélection spectrale présente un gradient latéral d'épaisseur selon une direction perpendiculaire au plan d'incidence. Dans l'exemple de la FIG. 4A, c'est le miroir de sortie 20 qui présente un gradient d'épaisseur.

On montre alors que la largeur de la réponse en énergie de la réflectivité du composant de sélection spectrale (courbe 105) dépend de la hauteur à laquelle les radiations I₂ sont incidentes sur le miroir de sortie 20, la hauteur étant définie selon l'axe parallèle à l'axe du gradient, c'est-à-dire ici selon l'axe z perpendiculaire au plan d'incidence. Comme illustré dans les encadrés des FIGS. 4A et 4B, les épaisseurs des couches vues par le faisceau sont différentes selon la hauteur de celui-ci. La variation d'épaisseur sur toute la surface est de l'ordre de quelques pourcents. Il en résulte une variation graduelle de la période de la multicouche le long de sa surface et ainsi (en se référant à la loi de Bragg : $\lambda=2d*sin(\theta)$) on obtient une variation de la position en longueur d'onde/énergie de la réflectivité maximale de la réponse spectrale du miroir. Cet effet permet, en déplaçant le miroir possédant le gradient selon l'axe de ce gradient, d'ajuster le recouvrement des réponses spectrales des deux miroirs et ainsi d'agir sur la largeur spectrale et la réflectivité maximale de la réponse du dispositif.

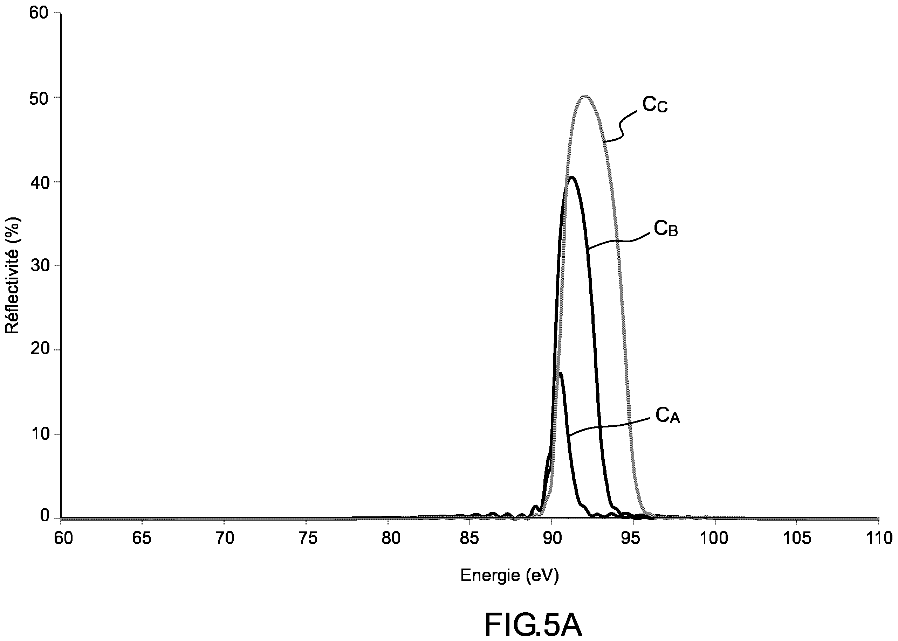

Ainsi, la FIG. 5A illustre trois courbes $C_A$, $C_B$, $C_C$, illustrant la réponse en énergie de la réflectivité du composant de sélection spectrale pour trois valeurs de hauteur correspondant respectivement à des valeurs de gradient de 0%, 2,5% et 5% (valeurs de pourcentage de variation de l'épaisseur). Les largeurs à mi-hauteur obtenues sont respectivement de 0,9 eV, 2,4 eV et 4,25 eV.

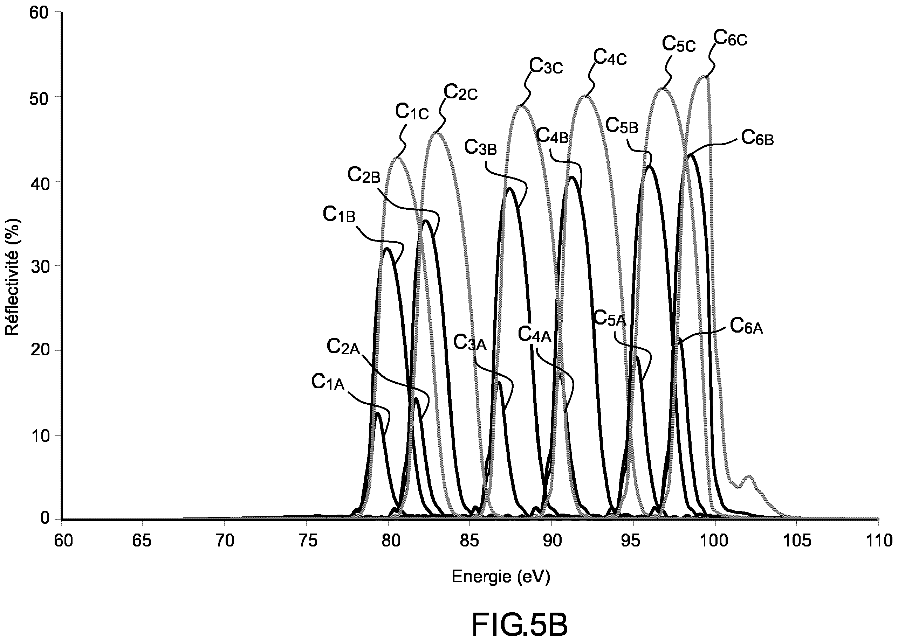

L'exemple présenté FIG. 5A et 5B a été réalisé à l'aide d'un agencement de deux miroirs multicouches de type « passe-haut » et « passe-bas » dont les caractéristiques sont données ci-dessous.

Le miroir multicouche de type « passe-bas » est un miroir multicouche bipériodique du type de celui représenté sur la FIG. 7A, avec une alternance de couches Molybdène (Mo) / Silicium (Si). La multicouche inférieure (71, FIG. 7A), côté substrat 73, comprend un agencement de 68 périodes de couches en Mo d'épaisseur 2.45 nm et de couches en Si d'épaisseur 5.9 nm. La multicouche supérieure (72, FIG. 7A), côté surface (les couches de Si étant déposées sur les couches de Mo), comprend un agencement de 6 périodes de couches en Mo d'épaisseur 2,55 nm et de couches en Si d'épaisseur 6.1 nm.

Le miroir multicouche de type « passe-haut » est miroir multicouche bipériodique du type de celui représenté sur la FIG. 7A, avec une alternance de couches Molybdène (Mo) / Silicium (Si). La multicouche inférieure (71, FIG. 7A), côté substrat, comprend un agencement de 68 périodes de couches en Mo d'épaisseur 2.6 nm et de couches en Si d'épaisseur 5.4 nm. La multicouche supérieure (72, FIG. 7A), côté surface (les couches de Si étant déposées sur les couches de Mo), comprend un agencement de 6 périodes de couches en Mo d'épaisseur 3.0 nm et de couches en Si d'épaisseur 4.65 nm.

Dans cet exemple, le gradient a été considéré sur le miroir passe-bas. Sur la FIG.5, la courbe $C_A$ correspond aux épaisseurs données ci-dessus. Les courbes $C_B$ et $C_C$ sont obtenus en réduisant les épaisseurs du revêtement donné pour le miroir passe-bas respectivement de 2.5% et de 5%.

Une description plus complète de la conception des miroirs multicouches à gradient d'épaisseur peut être trouvée par exemple dans l'article de Morawe et al. (« Design and performance of graded multilayers as focusing elements for x-ray optics », Rev Sci Instrum, 70(8), (1999))

La FIG. 5B illustre ces trois courbes mais cette fois en fonction également de l'angle d'incidence. Plus précisément, chacune des courbes référencées A, B, C, correspond respectivement à un gradient d'épaisseur tel que précisé ci-dessus et chaque courbe référencée 1 à 6 correspond à un angle d'incidence de 5°, 15°, 25°, 30°, 35,5° et 37,5°.

On observe que le contrôle de la bande passante par l'effet du gradient est possible sur toute la plage d'accordabilité en énergie du dispositif.

Les composants de sélection spectrale décrits dans la présente description présentent des applications notamment pour l'instrumentation des sources cohérentes XUV, mais pourraient également être utilisés avantageusement sur d'autres types de sources (plasmas, rayonnement synchrotron, etc.) par exemple pour la spectroscopie Extrême UV pour l'astrophysique (radiations incohérentes), l'instrumentation sur sources synchrotron ou encore la spectrométrie X de plasmas denses. Notamment, la double accordabilité du dispositif (en énergie et en bande passante) présente un intérêt par rapport aux solutions utilisées actuellement.

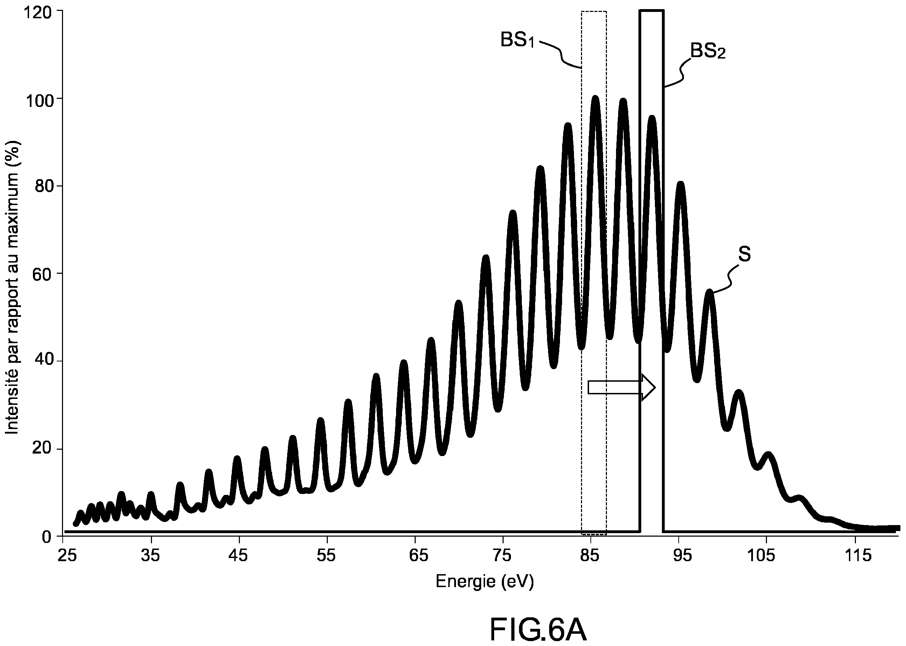

Par exemple, comme illustré sur la FIG. 6A, il est possible grâce au composant de sélection spectrale selon la présente description, de sélectionner une des raies des radiations XUV issues d'une source à génération d'harmoniques d'ordre élevée (HHG) et de changer la raie sélectionnée en faisant varier l'angle d'incidence sur les miroirs sans pour autant augmenter la largeur spectrale.

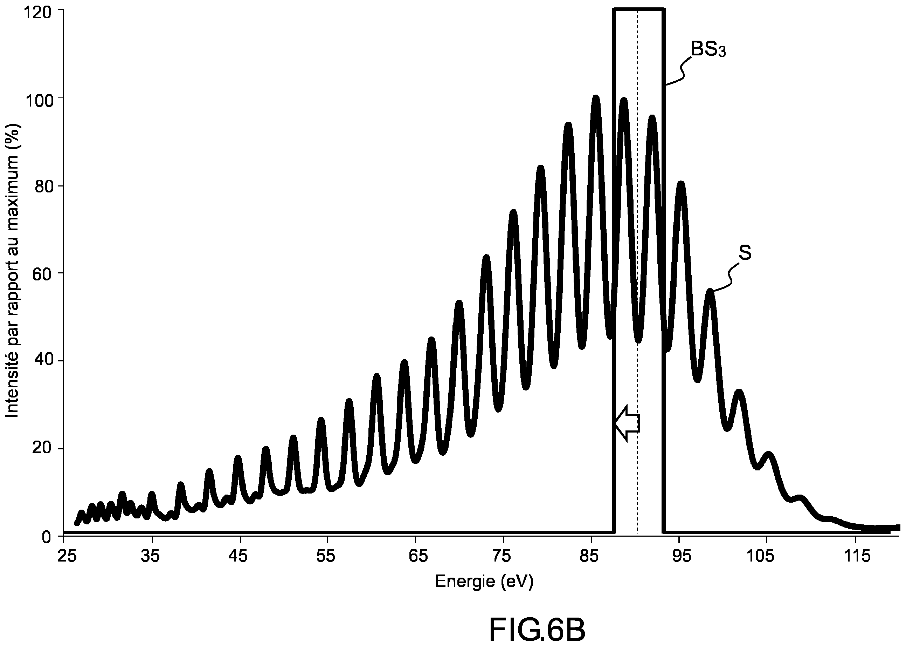

Il est également possible, comme cela est illustré sur la FIG. 6B de choisir la largeur spectrale de la sélection et ainsi sélectionner plusieurs harmoniques, ou de manière plus générale une plus grande gamme spectrale ce qui permet de transporter une impulsion plus courte temporellement. On peut ainsi sonder des processus ultra brefs en choisissant la durée de la sonde de manière appropriée et optimiser cette durée pour chaque processus étudié.

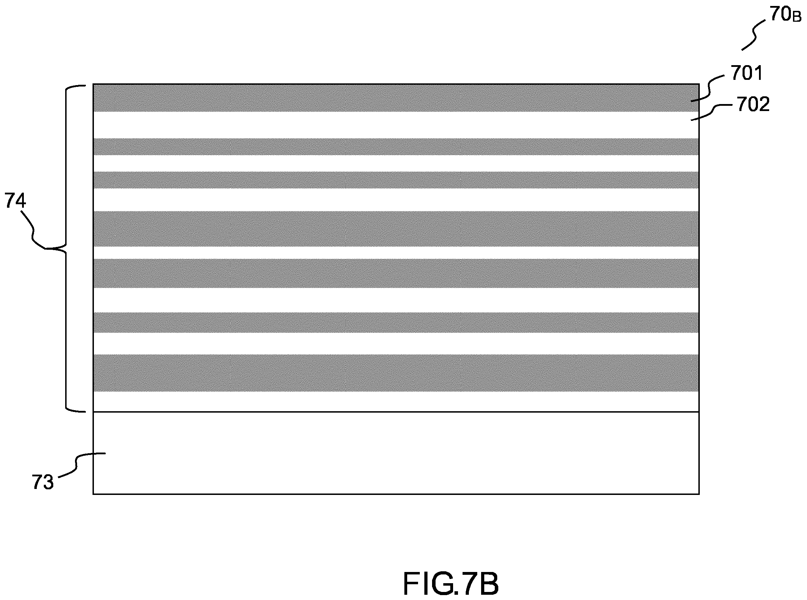

Les FIGS 7A et 7B illustrent des exemples de miroirs multicouches respectivement bipériodiques et apériodiques. Les déposants ont montré que ces miroirs étaient de bons candidats pour la réalisation d'un composant de sélection spectrale selon la présente description.

Les miroirs multicouches bipériodiques sont par exemple décrits dans J. Gautier et al. (« Two channel multilayer mirrors for astrophysics », Optics Communications 281, 3032-3035 ( 2008)).

Chacun des filtres peut être réalisé séparément à l'aide du logiciel IMD (disponible gratuitement sur http://www.rxollc.com/idl/).

Comme illustré sur la FIG. 7A, un miroir multicouche bipériodique $70_A$ comprend selon un exemple de réalisation un substrat 73, par exemple un substrat en silicium ou en silice, et, déposé sur le substrat, un premier empilement multicouche 71, appelé dans la présente description « multicouche inférieur » et un deuxième empilement multicouche 72, appelé dans la présente description « multicouche supérieure ». Le premier empilement multicouche 71 comprend un agencement périodique avec une première période $d_1$ de couches en un premier matériau et de couches en un deuxième matériau. Le deuxième empilement multicouche 72 comprend un agencement périodique avec une deuxième période $d_2$ de couches en un premier matériau et de couches en un deuxième matériau. Dans l'exemple de la FIG. 7A, les premier et deuxième matériaux des multicouches inférieur et supérieur sont identiques, référencés 701 et 702 sur la figure. Cela permet de modéliser deux réponses spectrales très proches mais légèrement décalées en énergie. Il est également possible d'utiliser des matériaux différents.

Une méthode de conception de miroirs passe-bas et passe-haut bipériodiques adaptés pour la réalisation d'un composant de sélection spectrale selon la présente description est par exemple la suivante.

Tout d'abord, les matériaux et les épaisseurs initiales des couches sont choisies comme celles d'un miroir périodique optimisé à une énergie donnée.

Le choix des matériaux dépend de la gamme d'énergie souhaitée et l'on pourra choisir les matériaux qui permettent d'obtenir la meilleure réflectivité dans la gamme d'énergie souhaitée. Le tableau 1 ci-dessous donne à titre d'exemple quelques couples de matériaux qui peuvent être utilisés selon la gamme spectrale recherchée:

| $\lambda$ | matériaux |
|---|---|
| 3nm < $\lambda$ < 4,4nm (282eV < E < 413eV) | Cr/Sc |
| 4,4nm < $\lambda$ < 6,7nm ( 185eV < E < 282eV) | W/C, Ni/C, Cr/C, Co/C |
| 6,7nm < $\lambda$ < 12,4nm (100 eV < E < 185 eV) | La/$B_4$C, Mo/$B_4$C, Mo/Y, Mo/Sr, Mo/Be |
| 12,4nm < $\lambda$ < 40nm (31 eV < E < 100 eV) | Mo/Si, Al/Mo/SiC, Al/Zr, Mg/SiC |
| 40nm < $\lambda$ < 100nm (12 eV < E < 31 eV) | Sc/Si, Gd/Si |

Avec Cr (chrome), Sc (scandium), W(tungstène), C (carbone), Ni (nickel), Co (cobalt), La (lanthane), B4C (carbure de bore), Mo (molybdène), Y (yttrium), Sr (strontium), Be (béryllium), Si (Silicium), SiC (carbure de silicium), Gd (gadolinium), Zr (zirconium), Mg (magnésium), Al (aluminium).

La période dans l'agencement multicouche suit approximativement la loi de Bragg :

$$\lambda = 2d.\sin(\theta)$$

Où $\lambda$ est la longueur d'onde du rayonnement à réfléchir, d la période de la multicouche et $\theta$ l'angle d'incidence (par rapport à la surface du miroir). Ainsi les périodes dans l'agencement multicouche sont, à 10% près, définies par cette formule en fonction de l'angle d'incidence et de la longueur d'onde/énergie d'optimisation. Les épaisseurs respectives des matériaux dans une période sont généralement choisies de manière à ce que la matériau le plus absorbant occupe entre 20% et 50% de l'épaisseur. La valeur précise des épaisseurs des matériaux peut être optimisée pour maximiser la réflectivité. Ces paramètres peuvent être choisies de telle manière à se situer au centre de la gamme d'accordabilité ; ainsi l'énergie d'optimisation correspond à l'énergie moyenne de la gamme spectrale que le composant doit couvrir. On peut choisir par exemple $\theta=45°$ afin de permettre une amplitude de variation angulaire maximale.

Une fois ces paramètres déterminés, la forme du spectre du filtre, la raideur du flanc et le taux de réjection peuvent être obtenus en ajustant la période de l'empilement multicouche supérieur du miroir bipériodique ainsi que le rapport d'épaisseur entre les différents matériaux (y) et le nombre de couches. Ces ajustements sont réalisés par exemple avec le logiciel IMD. L'utilisateur peut effectuer des simulations pour plusieurs valeurs des différents paramètres et ensuite faire défiler les différents résultats pour sélectionner celui qui lui semble le plus optimal. Le nombre total de couches utiles dans l'empilement multicouche est limité par l'absorption du rayonnement dans la matière. En considérant que le rayonnement XUV doit faire un aller et un retour jusqu'aux dernières couches utiles, on choisira l'épaisseur totale de l'empilement correspondant à la moitié longueur d'absorption moyen de l'empilement multicouche. Cela correspond à quelques dizaines à quelques centaines de couches selon les épaisseurs des couches et l'énergie de travail, ce qui correspond environ à un empilement de un à quelques centaines de nanomètres d'épaisseur. Le nombre de couches de l'empilement multicouche supérieur, qui va de quelques unités à une vingtaine, doit être suffisamment élevé pour avoir une influence sur les propriétés du miroir sans pour autant absorber trop de rayonnement incident.

Agir sur la période de l'empilement multicouche inférieure du miroir bipériodique permet de positionner le filtre en énergie. En effet, le composant de sélection spectrale final est composé de deux miroirs multicouches dont les réponses spectrales se recouvrent partiellement. Ainsi le multicouches passe-bas (respectivement passe-haut) présente une réflectivité maximale à une énergie un peu plus basse (respectivement un peu plus haute) que le miroir périodique initial dans l'étape de design. L'énergie de la réponse de ce miroir initial est avantageusement la même que la réponse conjointe des miroirs passe-bas et passe-haut.

Une méthode possible est alors de légèrement décaler les énergies des réponses spectrales des empilements multicouches supérieur et inférieur de la structure bipériodique afin de créer une dissymétrie dans la réponse du miroir et d'affiner les paramètres afin d'optimiser les performances du filtre (raideur du flanc, taux de réjection). Ces optimisations peuvent être réalisées manuellement mais aussi automatiquement à l'aide de logiciels d'optimisation commerciaux tels que TFCalc™.

Les deux filtres passe-bas et passe-haut peuvent être réalisés avec la même démarche.

En plus de ces étapes, voici des précisions si un gradient d'épaisseur doit être ajouté. Il s'agit tout d'abord de sélectionner le ou les miroirs qui vont porter un gradient d'épaisseur (i.e qui vont pouvoir déplacer leur réponse spectrale en longueur d'onde/énergie sans avoir à changer l'angle d'incidence comme décrit précédemment). Le plus simple est ensuite de déterminer, à angle fixe, toujours à l'aide du logiciel IMD, de combien de pourcents il est nécessaire de réduire ou augmenter toutes les épaisseurs du/des empilement(s) multicouche(s) pour obtenir le décalage escompté de la/des réponse(s) spectrale(s). Quelques pourcents (de 5 à 10 maximum) suffisent généralement car il faut toujours que les réponses spectrales soient partiellement recouvertes.

Bien que des exemples spécifiques aient été donnés dans le cas particulier de miroirs multicouches bipériodiques, d'autres types de miroirs multicouches multi périodiques pourront être utilisés. Dans ce cas, la procédure de dimensionnement des caractéristiques du miroir multicouche suit les mêmes règles que pour un miroir bipériodique sauf qu'il y a un nombre de sections supérieur à 2. Par exemple, il pourra y avoir un premier empilement multicouche inférieur avec plus de couches, les autres empilements, plus fins, peuvent être réalisés selon la méthodologie précédemment décrite. Les empilements multicouches supérieurs peuvent servir à modeler plus finement la forme de la réponse spectrale du miroir. Si le nombre d'empilements devient conséquent (au-delà de quelques uns) cela revient quasiment, dans la méthode, à dimensionner un miroir complètement apériodique où les couches doivent être dimensionnées une par une à l'aide d'un logiciel qui le fait automatiquement.

Comme illustré sur la FIG. 7B, un miroir multicouche apériodique $70_B$ comprend selon un exemple de réalisation un substrat 73, par exemple un substrat en silicium ou en silice, et, déposé sur le substrat, un empilement multicouche 74 formant une alternance apériodique de couches en différents matériaux, par exemple un premier matériau 701 et en un deuxième matériau 702.

La réalisation d'un miroir multicouche apériodique présentant les caractéristiques d'un miroir passe-haut ou d'un miroir passe-bas adapté à la réalisation d'un composant de sélection spectrale selon la présente description peut être faite par exemple au moyen d'un logiciel de simulation et d'optimisation de miroirs multicouches, par exemple un logiciel commercial de type TFCalc™.

Un avantage d'un agencement apériodique comme illustré sur la FIG. 7B peut être d'améliorer la raideur de la pente et la réjection des miroirs, même si la conception et la réalisation sont plus délicates que dans le cas de miroirs bipériodiques par exemple.

Selon un exemple de réalisation, on pourra partir d'une structure bipériodique conçue par exemple selon la méthode décrite précédemment. On pourra alors, au moyen du logiciel de simulation, ajuster les paramètres d'optimisation afin d'améliorer par exemple la pente, c'est-à-dire faire en sorte que la variation de réflectivité entre la mi-hauteur de la réflectivité maximale et le minimum se fasse sur la bande spectrale la plus restreinte possible. Cela peut être fait par un positionnement de « cibles » ou « targets » le long de la pente. L'optimisation par le logiciel passe par la minimisation d'un facteur de mérite autour des cibles définies par l'utilisateur à un angle d'incidence et à une énergie donnée. À chaque cible est aussi associée une réflectivité à viser dans le cadre de l'optimisation.

Les multicouches apériodiques utilisées en exemple dans le cadre de la présente description présentent environ 100 à 120 couches d'épaisseurs comprises entre 1 et 50 nm. L'épaisseur totale du miroir est avantageusement de l'ordre de la moitié de la longueur d'atténuation du rayonnement dans l'empilement multicouche.

Bien que décrite à travers un certain nombre d'exemples de réalisation, le composant de sélection spectrale et le procédé de fabrication de ce composant comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

1. Composant de sélection spectrale (100) pour radiations XUV comprenant :

   - un premier miroir multicouche (10) destiné à recevoir un faisceau de radiations XUV ($I_1$) selon un axe d'entrée situé dans un premier plan d'incidence et comprenant un premier axe de rotation (12) sensiblement perpendiculaire au plan d'incidence;
   - un deuxième miroir multicouche (20) destiné à recevoir dans un deuxième plan d'incidence un faisceau de radiations XUV ($I_2$) réfléchi par le premier miroir pour les renvoyer vers un axe de sortie du composant de sélection spectrale, et comprenant un deuxième axe de rotation (22) sensiblement perpendiculaire au deuxième plan d'incidence;
   dans lequel :

   - l'un desdits miroirs présente une première réflectivité spectrale en énergie dans l'XUV passe-haut, avec un flanc du côté des énergies basses de pente supérieure à 0,1 eV$^{-1}$ et une réjection des basses énergies plus grande que 20;
   - l'autre miroir présente une deuxième rélectivtié spectrale en énergie dans l'XUV passe-bas, avec un flanc du côté des énergies hautes de pente supérieure à 0,1 eV$^{-1}$ et une réjection des hautes énergies plus grande que 20 ;
   - lesdits miroirs présentent un recouvrement partiel de leurs réponses spectrales en énergie.

2. Composant de sélection spectrale selon la revendication 1, dans lequel les miroirs d'entrée et de sortie sont des miroirs multicouches multi périodiques, avantageusement bipériodiques.

3. Composant de sélection spectrale selon la revendication 1, dans lequel les miroirs d'entrée et de sortie sont des miroirs multicouches apériodiques.

4. Composant de sélection spectrale selon l'une quelconque des revendications précédentes, dans lequel les premier et deuxième plans d'incidence sont confondus.

5. Composant de sélection spectrale selon l'une quelconque des revendications précédentes, comprenant des moyens de couplage des rotations des premier et deuxième miroirs respectivement autour des premier et deuxième axes de rotation, permettant de conserver l'axe de sortie parallèle à l'axe d'entrée.

6. Composant de sélection spectrale selon la revendication 5, comprenant en outre des moyens de translation de l'un et/ou l'autre des premier et deuxième miroirs selon un axe sensiblement parallèle à l'axe d'entrée, permettant de garder fixe l'axe de sortie lorsque les miroirs sont entraînés en rotation.

**7.** Composant de sélection spectrale selon l'une quelconque des revendications précédentes, dans lequel :

- au moins l'un des premier et deuxième miroirs présente un gradient latéral d'épaisseur dans une direction sensiblement perpendiculaire au plan d'incidence du miroir;
- le composant comprend en outre des moyens de translation dudit miroir dans la direction du gradient.

**8.** Système d'émission d'un faisceau de radiations XUV à énergie variable comprenant une source de radiations XUV destinée à émettre un faisceau de radiations XUV selon une direction donnée et un composant de sélection spectrale selon l'une quelconque des revendications précédentes, destiné à recevoir ledit faisceau de radiations selon son axe d'entrée.

**9.** Procédé de sélection spectrale d'un faisceau de radiations XUV ($I_1$) présentant une large bande spectrale, comprenant :

- la réflexion par un premier miroir multicouche (10) du faisceau de radiations XUV ($I_1$) selon un axe d'entrée situé dans un premier plan d'incidence;
- la réflexion par un deuxième miroir multicouche (20) du faisceau de radiations XUV ($I_2$) réfléchi par le premier miroir vers un axe de sortie du composant de sélection spectrale, le faisceau réfléchi par le deuxième miroir et l'axe de sortie étant compris dans un deuxième plan d'incidence;
- la rotation du premier miroir selon un premier axe de rotation (12) sensiblement perpendiculaire au premier plan d'incidence et la rotation du deuxième miroir selon un deuxième axe de rotation (22) sensiblement perpendiculaire au deuxième plan d'incidence pour changer l'énergie du faisceau de radiation XUV en sortie ; dans lequel :

    - l'un desdits miroirs présente une première réflectivité spectrale en énergie dans l'XUV passe-haut, avec un flanc du côté des énergies basses de pente supérieure à 0,1 eV$^{-1}$ et une réjection des basses énergies plus grande que 20;
    - l'autre miroir présente une deuxième réflectivité spectrale en énergie dans l'XUV passe-bas, avec un flanc du côté des énergies hautes de pente supérieure à 0,1 eV$^{-1}$ et une réjection des hautes énergies plus grande que 20 ;
    - lesdits miroirs présentent un recouvrement partiel de leurs réponses spectrales en énergie.

**10.** Procédé de sélection spectrale selon la revendication 9, dans lequel les rotations des premier et deuxième miroirs sont couplés, permettant de conserver l'axe de sortie parallèle à l'axe d'entrée.

**11.** Procédé de sélection spectrale selon l'une quelconque des revendications 9 ou 10, comprenant en outre la translation de l'un et/ou l'autre des premier et deuxième miroirs selon un axe sensiblement parallèle à l'axe d'entrée, permettant de garder fixe l'axe de sortie lorsque les miroirs sont entraînés en rotation.

**12.** Procédé de sélection spectrale selon l'une quelconque des revendications 9 à 11, dans lequel :

- au moins l'un des premier et deuxième miroirs présentant un gradient latéral d'épaisseur dans une direction sensiblement perpendiculaire au plan d'incidence du miroir;

le procédé comprend en outre une translation dudit miroir dans la direction du gradient afin de modifier la largeur spectrale du faisceau de radiation XUV en sortie.


**Patentansprüche**

**1.** Spektrumsauswahlkomponente (100) für XUV-Strahlung, die Folgendes umfasst:

- einen ersten Mehrschichtspiegel (10), bestimmt zum Empfangen eines Strahlenbündels von XUV-Strahlung ($I_1$) entlang einer Eintrittsachse, die sich in einer ersten Einfallsebene befindet und eine erste Drehachse (12) im Wesentlichen lotrecht zur Einfallsebene umfasst;
- einen zweiten Mehrschichtspiegel (20), bestimmt zum Empfangen eines vom ersten Spiegel reflektierten Strahlenbündels von XUV-Strahlung ($I_2$) in einer zweiten Einfallsebene, um ihn zu einer Ausgangsachse der Spektrumsauswahlkomponente zurückzuführen, und eine zweite Drehachse (22) im Wesentlichen lotrecht zur zweiten Einfallsebene umfassend;

wobei:

- einer der Spiegel ein erstes spektrales Energiereflexionsvermögen in Hochpass-XUV mit einer Niederenergieflanke mit einer Steigung von mehr als 0,1 eV$^{-1}$ und einer Niederenergieabweisung von mehr als 20 hat;
- der andere Spiegel ein zweites spektrales Energiereflexionsvermögen in Tiefpass-XUV mit einer Hochenergieflanke mit einer Steigung von mehr als 0,1 eV$^{-1}$ und einer Hochenergieabweisung von mehr als 20 hat;
- die Spiegel eine Teilüberlappung ihres Energie-Spektralverhaltens aufweisen.

2. Spektrumsauswahlkomponente nach Anspruch 1, wobei die Ein- und Ausgangsspiegel mehrperiodische, vorteilhafterweise biperiodische Mehrschichtspiegel sind.

3. Spektrumsauswahlkomponente nach Anspruch 1, wobei die Ein- und Ausgangsspiegel aperiodische Mehrschichtspiegel sind.

4. Spektrumsauswahlkomponente nach einem der vorherigen Ansprüche, wobei die erste und zweite Einfallsebene zusammenfallen.

5. Spektrumsauswahlkomponente nach einem der vorherigen Ansprüche, die Mittel zum Koppeln der Drehungen des ersten und zweiten Spiegels um die erste bzw. zweite Drehachse umfasst, die es zulassen, die Ausgangsachse parallel zur Eingangsachse zu halten.

6. Spektrumsauswahlkomponente nach Anspruch 5, die ferner Mittel zum Verschieben des einen und/oder des anderen aus erstem und zweitem Spiegel entlang einer Achse im Wesentlichen parallel zur Eingangsachse umfasst, so dass die Ausgangsachse fest gehalten werden kann, wenn die Spiegel gedreht werden.

7. Spektrumsauswahlkomponente nach einem der vorherigen Ansprüche, wobei:

- der einer von dem ersten und dem zweiten Spiegel einen lateralen Dickengradienten in einer Richtung im Wesentlichen lotrecht zur Einfallsebene des Spiegels aufweist;
- die Komponente ferner Mittel zum Verschieben des Spiegels in Richtung des Gradienten umfasst.

8. System zum Emittieren eines Strahlenbündels von XUV-Strahlung mit variabler Energie, das eine XUV-Strahlungsquelle zum Emittieren eines Strahlenbündels von XUV-Strahlung in einer gegebenen Richtung und eine Spektrumsauswahlkomponente nach einem der vorherigen Ansprüche umfasst, um das Strahlenbündel von Strahlung entlang seiner Eingangsachse zu empfangen.

9. Verfahren zur Spektrumsauswahl eines Strahlenbündels von XUV-Strahlung ($I_1$) mit einem breiten Spektralband, das Folgendes beinhaltet:

- Reflektieren des Strahlenbündels von XUV-Strahlung ($I_1$) entlang einer Eintrittsachse, die sich in einer ersten Einfallsebene befindet, durch einen ersten Mehrschichtspiegel (10);
- Reflektieren des vom ersten Spiegel reflektierten Strahlenbündels von XUV-Strahlung ($I_2$) zu einer Ausgangsachse der Spektrumsauswahlkomponente durch einen zweiten Mehrschichtspiegel (20), wobei das vom zweiten Spiegel reflektierte Strahlenbündel und die Ausgangsachse in einer zweiten Einfallsebene liegen;
- Drehen des ersten Spiegels entlang einer ersten Drehachse (12) im Wesentlichen lotrecht zur ersten Einfallsebene und Drehen des zweiten Spiegels entlang einer zweiten Drehachse (22) im Wesentlichen lotrecht zur zweiten Einfallsebene, um die Energie des Strahlenbündels von XUV-Strahlung am Ausgang zu verändern;

wobei:

- einer der Spiegel ein erstes spektrales Energiereflexionsvermögen in Hochpass-XUV mit einer Niederenergieflanke mit einer Steigung von mehr als 0,1 eV$^{-1}$ und einer Niederenergieabweisung von mehr als 20 hat;
- der andere Spiegel ein zweites spektrales Energiereflexionsvermögen in Tiefpass-XUV mit einer Hochenergieflanke mit einer Steigung von mehr als 0,1 eV$^{-1}$ und einer Hochenergieabweisung von mehr als 20 hat;
- die Spiegel eine Teilüberlappung ihres Energie-Spektralverhaltens aufweisen.

**10.** Spektrumsauswahlverfahren nach Anspruch 9, wobei die Drehungen des ersten und zweiten Spiegels gekoppelt sind, so dass die Ausgangsachse parallel zur Eingangsachse gehalten werden kann.

**11.** Spektrumsauswahlverfahren nach Anspruch 9 oder 10, das ferner das Verschieben des einen und/oder des anderen aus erstem und zweitem Spiegel entlang einer Achse im Wesentlichen parallel zur Eingangsachse beinhaltet, so dass die Ausgangsachse fest gehalten werden kann, während die Spiegel gedreht werden.

**12.** Spektrumsauswahlverfahren nach einem der Ansprüche 9 bis 11, wobei:

- mindestens einer des ersten und des zweiten Spiegels einen lateralen Dickengradienten in einer Richtung im Wesentlichen lotrecht zur Einfallsebene des Spiegels aufweist;

das Verfahren ferner eine Verschiebung des Spiegels in Richtung des Gradienten beinhaltet, um die Spektrumsbreite des Strahlenbündels von XUV-Strahlung am Ausgang zu verändern.

**Claims**

**1.** A spectral selection component (100) for XUV radiation, comprising:

- a first multilayer mirror (10) for receiving an XUV radiation beam ($I_1$) along an input axis located in a first plane of incidence and comprising a first axis of rotation (12) that is substantially perpendicular to the plane of incidence;
- a second multilayer mirror (20) for receiving, in a second plane of incidence, an XUV radiation beam ($I_2$) reflected by the first mirror in order to transmit the radiation to an output axis of the spectral selection component, and comprising a second axis of rotation (22) that is substantially perpendicular to the second plane of incidence;

wherein:

- one of said mirrors has a first energy spectral reflectance in the high-pass XUV, with a flank on the low-energy side with a steepness that is greater than 0.1 eV$^{-1}$ and a rejection of low energies that is greater than 20;
- the other of said mirrors has a second energy spectral reflectance in the low-pass XUV, with a flank on the high-energy side with a steepness that is greater than 0.1 eV$^{-1}$ and a rejection of high energies that is greater than 20;
- said mirrors have an only partial overlap in their spectral energy responses.

**2.** The spectral selection component according to claim 1, wherein the input and output mirrors are multiperiodic, advantageously biperiodic, multilayer mirrors.

**3.** The spectral selection component according to claim 1, wherein the input and output mirrors are aperiodic multilayer mirrors.

**4.** The spectral selection component according to any one of the preceding claims, wherein the first and second planes of incidence are coincident.

**5.** The spectral selection component according to any one of the preceding claims, comprising means for coupling the rotations of the first and second mirrors about the first and second axes of rotation, respectively, allowing the output axis to be kept parallel to the input axis.

**6.** The spectral selection component according to claim 5, further comprising means for translating one and/or the other of the first and second mirrors along an axis that is substantially parallel to the input axis, allowing the output axis to be kept fixed when the mirrors are rotated.

**7.** The spectral selection component according to any one of the preceding claims, wherein:

- at least one of the first and second mirrors has a lateral thickness gradient in a direction that is substantially perpendicular to the plane of incidence of the mirror;
- the component further comprises means for translating said mirror in the direction of the gradient.

8. A system for emitting a variable-energy XUV radiation beam, comprising an XUV radiation source for emitting an XUV radiation beam in a given direction and a spectral selection component according to any one of the preceding claims, for receiving said radiation beam along its input axis.

9. A method for spectrally selecting an XUV radiation beam ($I_1$) having a wide spectral band, comprising:

- the reflection, by a first multilayer mirror (10), of the XUV radiation beam ($I_1$) along an input axis located in a first plane of incidence;
- the reflection, by a second multilayer mirror (20), of the XUV radiation beam ($I_2$) reflected by the first mirror toward an output axis of the spectral selection component, the beam reflected by the second mirror and the output axis being located in a second plane of incidence;
- the rotation of the first mirror about a first axis of rotation (12) that is substantially perpendicular to the first plane of incidence and the rotation of the second mirror about a second axis of rotation (22) that is substantially perpendicular to the second plane of incidence in order to change the energy of the output XUV radiation beam;

wherein:
one of said mirrors has a first energy spectral reflectance in the high-pass XUV, with a flank on the low-energy side with a steepness that is greater than 0.1 eV-1 and a rejection of low energies greater that is greater than 20;

- the other mirror has a second energy spectral reflectance in the low-pass XUV, with a flank on the high-energy side with a steepness that is greater than 0.1 eV-1 and a rejection of high energies that is greater than 20;
- said mirrors have a partial overlap of their spectral energy responses

10. The spectral selection method according to claim 9, wherein the rotations of the first and second mirrors are coupled, allowing the output axis to be kept parallel to the input axis.

11. The spectral selection method according to either of claims 9 and 10, further comprising the translation of one and/or the other of the first and second mirrors along an axis that is substantially parallel to the input axis, allowing the output axis to be kept fixed when the mirrors are rotated.

12. The spectral selection method according to any one of claims 9 to 11, wherein:

- at least one of the first and second mirrors has a lateral thickness gradient in a direction that is substantially perpendicular to the plane of incidence of the mirror;

the method further comprises translating said mirror in the direction of the gradient in order to modify the spectral width of the output XUV radiation beam.

FIG.1A

FIG.1B

FIG.2A

FIG.2B

EP 3 548 938 B1

**FIG.2C**

FIG.3A

FIG.3B

FIG.4A

EP 3 548 938 B1

FIG.4B

EP 3 548 938 B1

FIG.5A

FIG.5B

FIG.6A

FIG.6B

FIG.7A

EP 3 548 938 B1

EP 3 548 938 B1

FIG.7B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **POLETTO et al.** Time-compensated extreme-UV and soft x-ray monochromator for ultrashort high-order harmonie pulses. *J. Opt. A: Pure Appl. Opt.,* vol. 3 (201), 374-379
- **E. SPILLER.** Soft X-Rays Optics. SPIE Optical Engineering Press, 1994
- **MORAWE et al.** Design and performance of graded multilayers as focusing elements for x-ray optics. *Rev Sci Instrum,* 1999, vol. 70 (8
- **J. GAUTIER et al.** Two channel multilayer mirrors for astrophysics. *Optics Communications,* 2008, vol. 281, 3032-3035